# EUROPÄISCHE PATENTSCHRIFT

(11) **EP 1 331 980 B1**
(45) Veröffentlichungstag und Bekanntmachung des Hinweises auf die Patenterteilung: **10.05.2006**
(21) Anmeldenummer: 01988616.7
(22) Anmeldetag: 23.10.2001
(51) Int. Cl.: B01D 39/16, E06B 9/52, F24F 3/16

(54) **VERWENDUNG EINES GERAUHTEN TEXTILEN FLÄCHENGEBILDES ALS POLLENSCHUTZ FÜR FENSTER UND TÜREN**
USE OF A NAPPED, PLANAR TEXTILE STRUCTURE AS PROTECTION AGAINST POLLEN FOR WINDOWS AND DOORS
UTILISATION D'UN ARTICLE TEXTILE PLAT RUGUEUX TANT QUE PROTECTION CONTRE LES POLLENS POUR PORTES ET FENETRES

(30) Priorität: 26.10.2000 DE 10053233
(43) Veröffentlichungstag der Anmeldung: 06.08.2003
(73) Patentinhaber: tesa AG, 20253 Hamburg (DE)
(72) Erfinder: SCHRÖDER, Andreas, 22301 Hamburg (DE)
(86) Internationale Anmeldenummer: PCT/EP2001/012218
(87) Internationale Veröffentlichungsnummer: WO 2002/034360

(56) Entgegenhaltungen:
- DE-A- 3 045 723
- DE-U- 29 821 020
- FR-A- 2 761 901
- US-A- 5 419 953

## Beschreibung

Die Erfindung bezieht sich auf ein gerauhtes textiles Flächengebilde, welches als Schutz vor dem Eindringen staubförmiger, durch die Atmosphärenluft transportierter Allergene wie z.B. Pollenstaub und Pilzsporen in Wohn- und Arbeitsräume durch die vollflächige Anbringung vor Fenstern und Türen eingesetzt wird.

Seit mehreren Jahren wird in der Bundesrepublik das Auftreten von Pollinose (Heuschnupfen), also der allergischen Reaktion der Schleimhäute des Auges sowie der oberen und unteren Atemwege mit Blütenpollen und anderen durch die Luft transportierten Allergenen, in der Bevölkerung verfolgt. Dabei wurde ermittelt, dass in Deutschland in den letzten Jahren der Bevölkerungsanteil bei etwa 11-15% liegt. Die allergische Reaktion einer Pollenallergie äußert sich meist durch Rötungen und Tränenfluß der Augen (Konjunktivitis), Niesattacken (Rhinitis) sowie Reizhusten (Asthma bronchiale) als Frühreaktionen. Als Spätreaktion auf die Pollenallergie sind z.B. Neurodermitis oder Ekzeme an der Haut bekannt. Als weitreichendere Konsequenzen neben den persönlichen Beschwerden der Betroffenen lassen sich Verdienstausfall bzw. Arbeitsunfähigkeit während der Pollenflugperiode oder Anstieg von ärztlichen Behandlungskosten leicht ableiten, so dass für ein Pollenschutzgitter im Sinne der Erfindung zur Anbringung vor Fenster und Türen von Wohn- und Arbeitsräumen ein großer Bedarf besteht. Weiteres über Pollinose lässt sich im Ratgeber Pollenallergie, Ute Künkele, München 1992 recherchieren.

Ein Pollenschutz für Fenster und Türen muss dem Anwender als wesentlichste Eigenschaften eine ausreichende Belüftbarkeit der Räumlichkeiten bieten, eine genügende Transparenz für den Lichteinfall bzw. den Blick nach draußen und eine lindernde Wirkung bezüglich der Pollenallergie. Die wichtigsten Parameter zur Beschreibung eines Pollenschutzes sind demnach die Luftdurchlässigkeit, die optische Transparenz sowie die Filterwirkung gegenüber Pollen.

Vollflächig vor Fenstern und Türen angebrachte Schutzsysteme, die das Eindringen von größeren Objekten wie z.B. Insekten in Wohnräume verhindern sollen, sind bekannt (= Fliegengitter). In DE 3045723 werden z.B. Gardinen, Netze, Filter oder Siebe für einen solchen Zweck beschrieben, die mittels Druckknöpfen an Fenster- oder Türrahmen angebracht werden. Aufgrund ihrer relativ großen Maschenweiten von 1 - 2 mm besitzen diese keine ausreichende Schutzwirkung vor Pollenstaub (Größe etwa 10 - 50µm) und Pilzsporen (Größe etwa 200µm).

Filtrationseinrichtungen, die Luft völlig von Pollen, Keimen und Sporen befreien, finden Einsatz in der Klimatechnik und im Automobil. Die hohe Filterwirkung wird in DE 3904623 z.B. dadurch erreicht, dass Filtermatten, auch oft mehrlagig, aus Vliesstoffen eingesetzt werden, die durch ihre Faserigkeit die Filterstufe unpassierbar für o.a. Allergene machen. Zur Erhöhung des Kontaktes der partikelbeladenen Luft mit dem Filter wird das Laminat aus Filtermatten zusätzlich zickzackgefaltet. Solche Filtermatten besitzen jedoch aufgrund ihrer nicht vorhandenen visuellen Transparenz keine Eignung als Schutzvorrichtung im Sinne der vorgeschlagenen Erfindung. Darüberhinaus entstehen bei solchen Filtern für Klimaanlagen in Automobilen wesentlich höhere Staudrücke als bei der Anwendung vor einer Fensterfläche durch die auftreffende Luftbewegung, so dass Filtervliese verwendet werden müssen. Ein Einsatz von Filtervliesen vollflächig vor Fenstern eignet sich aufgrund mangelnder visueller Transparenz nicht als Pollenschutz im erfinderischen Sinne.

Eine weitere vor Fenstern angebrachte Schutzvorrichtung gegen Pollen, Keime und Sporen wird z.B. in DE 4300422 angegeben. Hier erfolgt die Anbringung eines Stoffmaterials als Schutzvorrichtung jedoch nicht vollflächig vor der Fensterscheibe, sondern in den beiden keilartigen Zwischenräumen sowie der rechteckigen Öffnung an der Oberseite eines in Kippstellung stehenden Fensters. Das Problem der nicht vorhandenen, visuellen Transparenz des Schutzes wird durch diese Art der Anbringung umgangen, jedoch muss der Schutz für eine völlige Öffnung des Fensters zu Lüftungszwecken durch Aufschwenken entfernt werden, so dass keine Schutzwirkung mehr existent ist.

Weiterhin besteht die Möglichkeit, mit einem Gewebe einzig durch das Einstellen der Maschenweite die in eine Räumlichkeit einströmende Luft von Pollen zu reinigen. Die Größen der meisten in Europa vorkommenden, allergieauslösenden Pollen, im wesentlichen Birke, Süßgräser, Gänse- und Beifuß, Wegerich, Hasel, liegen in der Region von 20 - 40 µm. Die für eine rein mechanische Filterung notwendige Maschenweite beträgt daher wenigstens 20 µm und lässt daher keine ausreichende visuelle Transparenz und Luftdurchlässigkeit mehr zu.

Aufgabe der vorgeschlagenen Erfindung ist es, die Eigenschaften Luftdurchlässigkeit, visuelle Transparenz und genügende Filterwirkung gegen Pollen in einem Schutzsystem zu verwirklichen. Kennzeichnend ist dabei, dass der Pollenschutz bei ausreichender Filterwirkung von 70-80% Abscheidegrad gegen Pollenstaub noch eine ausreichende Erneuerung der Raumluft sowie eine ausreichende visuelle Transparenz zulässt. Gute Werte für Luftdurchlässigkeiten, die eine akzeptable Belüftung eines Raumes erlauben, liegen im Größenbereich von größer als 20000 m³/m²/h bei einem Differenzdruck von 300 Pa. Eine ausreichende Transparenz im Sinne der Erfindung liegt zwischen 20 und 100% Transmission. Gelöst wird die Aufgabe der ausreichenden visuellen Transparenz und Luftdurchlässigkeit bei gleichzeitiger genügender Filterwirkung durch die Verwendung eines gerauhten textilen Flächengebildes.

Der Ausdruck textile Flächengebilde beschreibt die Gesamtheit aller Möglichkeiten, aus Fadenmaterial durch gängige Flächenbildungsprozesse wie Stricken, Wirken oder Weben Textilien darzustellen. Grundlegendes über die textile Flächenbildungsprozesse läßt sich in Alfons Hofer: "Stoffe 2", 1983, Deutsch Fachbuchverlag oder "Kettwirkpraxis", Heft 4, 1970, Seite 19-20, Technologien der Kettwirkerei recherchieren.

Das Aufrauhen textiler Flächengebilde wird durch einen Aufrauhungsprozeß nach dem Flächenbildungsprozeß durchgeführt. Es geschieht generell durch das Führen der Textilbahn über Kratzwerkzeuge, meist werden diese als scharfkantig, mit Schneiden oder Stahlbürsten besetzte Walzen realisiert. Beim Aufrauhen werden einzelne Filamente des Fadenmaterials durchtrennt und aus dem Faden herausgezogen, während das andere Filamentende im Faden verbleibt. Weiteres lässt sich in Peter/Rouette: "Grundlagen der Textilveredlung", Deutscher Fachbuchverlag Frankfurt,1989 nachschlagen.

Häufig werden solche gerauhte Gewebe aufgrund ihrer angenehmen Haptik für Bekleidungszwecke beispielsweise als Frontfixierung im hochwertigen Oberbekleidungsbereich verwendet, gerauhte Gewebe finden aber auch als Pflastermaterial ihren Einsatz. Die Verwendung von gerauhten textilen Flächengebilden als Pollenschutz vor Fensterflächen und Türöffnungen sowie für sonstige Lüftungseintritte ist ein neues Anwendungsfeld und soll geschützt werden.

Der Einsatz eines gerauhten textilen Flächengebildes bietet gegenüber dem zitierten Ansatz, einzig durch die Verringerung der Maschenweite eine Filtration von Pollen zu erzielen, den Vorteil, dass ohne die prozessseitige Verringerung der Maschenweite eine höhere Filterwirkung erzielt werden kann, da einzelne durchtrennte Filamente des Fadens in die Masche ragen und die durchströmbare Fläche einer Masche verkleinern. Dadurch kommen Abstände zwischen den Filamenten zustande, die unpassierbar für Pollen sind. Hinzu kommt, dass durch die Aufstellung der Filamente eine Ausdehnung des zweidimensionalen Flächengebildes in die dritte Dimension stattfindet. Die aufgestellten Filamente bedeuten somit einerseits durch einen längeren Strömungsweg eine größere Kontaktzeit der Luft mit dem Filtermaterial und andererseits eine Vergrößerung der Filteroberfläche, die zu verbesserten Filtereigenschaften führen.

Auf diese Art ist beispielsweise eine höhere Luftdurchlässigkeit möglich, die eine bessere Belüftung der Räumlichkeiten ermöglicht, da für die Filtereigenschaft die Maschenweite nicht auf den Teilchendurchmesser erniedrigt werden muss.

## Patentansprüche

1. Verwendung eines textilen Flächengebildes, das eine visuelle Transmission zwischen 20 und 100 % aufweist, zur Anbringung vor Fenstern oder Türen zum Schutz vor staubförmigen Allergenen wie Pollen oder Hausstaub, **dadurch gekennzeichnet, dass** das oben genannte textile Flächengebilde gerauht ist

## Claims

1. The use of a textile fabric having a visual transmission between 20% and 100% for attachment in front of windows or doors to guard against dusty allergens such as pollen or house dust, **characterized in that** the aforementioned textile fabric is napped.

## Revendications

1. Utilisation d'une structure plane textile qui présente une transmission visuelle comprise entre 20 et 100%, destinés à être installée devant des fenêtres ou des portes pour une protection contre les allergènes poussiéreux tels que les pollens ou les poussières de maison, **caractérisée en ce que** la structure plane textile susmentionnée est rendue rugueuse.
